Europäisches Patentamt

European Patent Office

Office européen des brevets

(11) Veröffentlichungsnummer: **0 277 461**
**A1**

# (12) EUROPÄISCHE PATENTANMELDUNG

(21) Anmeldenummer: **87810759.8**

(22) Anmeldetag: **17.12.87**

(51) Int. Cl.⁴: **B62M 27/02 , B62B 17/08**

(30) Priorität: **17.12.86 CH 5020/86**

(43) Veröffentlichungstag der Anmeldung:
**10.08.88 Patentblatt 88/32**

(84) Benannte Vertragsstaaten:
**AT CH DE FR IT LI**

(71) Anmelder: **Camping Gaz (Schweiz) AG**
**Quellenweg 15a**
**CH-3084 Bern-Wabern(CH)**

(72) Erfinder: **Vonlanthen, Josef**
**Kapelle 338**
**CH-1718 Rechthalten(CH)**

(74) Vertreter: **Tschudi, Lorenz et al**
**Bovard AG Patentanwälte VSP**
**Optingenstrasse 16**
**CH-3000 Bern 25(CH)**

(54) **Schlitten sowie Bremsvorrichtung für einen Schlitten.**

(57) Der Schlitten (1) umfasst einen Rahmen (2), innerhalb welchem ein Sitz (3) angeordnet ist. In einem nach unten abstehenden Ansatz (14) eines Vorbaues (5) im Rahmen (2) ist eine Steuersäule (6) mit einem Steuerrad (7) drehbar und in ihrer Längsrichtung verschiebbar gelagert. Beim Verdrehen des Steuerrades (7) werden zwei bewegliche Kufen (12, 13) im vorderen unteren Bereich des Rahmens (2) zur Steuerung des Schlittens betätigt. Beim Heranziehen der Steuersäule (6) in Richtung des Steuerrades (7) wird durch eine mit der Steuersäule (6) verbundenen Stange (25) ein Bremsorgan (33) betätigt. Das Bremsorgan (33) ist gabelförmig ausgebildet, wobei die verbreiterten Enden (39, 40) der gabelförmigen Teile (34, 35) beim Verschieben des Steuerrades von der Position (7) in die Position (7') in eine Bremsposition (34', 35') verbracht werden. Mit dem Steuerrad kann der Schlitten sowohl gelenkt als auch gebremst werden, wobei die Bremsvorrichtung bei bestehenden Schlitten nachträglich mit einfachen Handgriffen eingebaut werden kann.

FIG. 2

## SCHLITTEN SOWIE BREMSVORRICHTUNG FUER EINEN SCHLITTEN

Die vorliegende Erfindung betrifft einen Schlitten mit einem auf einem Rahmen angeordneten Sitz und festen sowie mindestens einer beweglichen, unterhalb des Rahmens angeordneten Kufe, einer im Rahmen gelagerten und um ihre Längsachse drehbaren, zur Steuerung der beweglichen Kufe bestimmten Steuersäule und einer Bremsvorrichtung.

Im weiteren bezieht sich die Erfindung auf eine Bremsvorrichtung für einen Schlitten.

Es sind Schlitten vorbekannt, deren Steuerkufen mittels einer Steuersäule und einem daran befestigten Steuerrad gelenkt werden können. Diese Schlitten weisen den Nachteil auf, dass die Bremsung mit einem separat angeordneten Bügel erfolgt, so dass das Steuerrad nur noch mit einer Hand betätigt werden kann, was insbesondere bei Gebrauch der Schlitten durch Kinder ein erhöhtes Gefahrenrisiko darstellt.

Aus der US-Patentschrift 4 349 209 ist ein Schlitten mit einer Bremsvorrichtung bekannt, bei welchem Schlitten die Steuerung mit am oberen Ende einer Steuerkufe befestigten Handgriffen erfolgt. Der Bremsvorgang muss mit einem sich seitlich von den Sitzen befindlichen Hebel ausgelöst werden.

Aus der veröffentlichten französischen Patentanmeldung 2 354 911 ist ein Schlitten mit einer mit den Füssen betätigbaren Steuervorrichtung und einer unabhängig von dieser von Hand betätigbaren Bremsvorrichtung vorbekannt.

Aus der italienischen Patentschrift 1 081 343 ist ein Schlitten vorbekannt bei dem mit einem Hebel eine Steuer-und Bremsvorrichtung am rückwärtigen Ende des Schlittens betätigt wird. Dieser Schlitten weist keine steuerbaren Kufen auf. Die Steuer-und Bremsvorrichtung ist kompliziert, zu wenig robust und damit störanfällig konstruiert.

Es ist eine Aufgabe der vorliegenden Erfindung, einen Schlitten der eingangs genannten Art derart auszubilden, dass mit der Steuersäule sowohl die Steuerkufen als auch die Bremsvorrichtung betätigt werden können. Dies wird erfindungsgemäss dadurch erzielt, dass die Steuersäule mit der Bremsvorrichtung zusammenwirkt und zur Betätigung der Bremsvorrichtung verschiebbar oder verkippbar gelagert ist.

Im weiteren soll eine Bremsvorrichtung für einen Schlitten der eingangs genannten Art geschaffen werden. Die Bremsvorrichtung soll bei Schlitten mit steuerbaren Kufen, die keine Bremsvorrichtung aufweisen, mit einfachen Handgriffen nachträglich eingebaut werden können. Dies wird erfindungsgemäss erzielt durch ein Verbindungselement, dessen eines Ende mit einem Befestigungsorgan zur Befestigung an der Steuersäule des Schlittens versehen ist, und dessen anderes Ende mit einem verdrehbar bezüglich des Schlittens verbindbaren Bremsorgan verbunden ist.

Bevorzugte Ausführungsformen ergeben sich aus den abhängigen Ansprüchen.

Im folgenden wird ein Ausführungsbeispiel der Erfindung sowie dessen Verwendung anhand der beiliegenden Zeichnung näher beschrieben. Es zeigen:

Fig. 1 eine perspektivische Ansicht des Schlittens,

Fig. 2 eine Seitenansicht des Schlittens,

Fig. 3 eine Ansicht der Bremsvorrichtung mit Steuerkufen von unten.

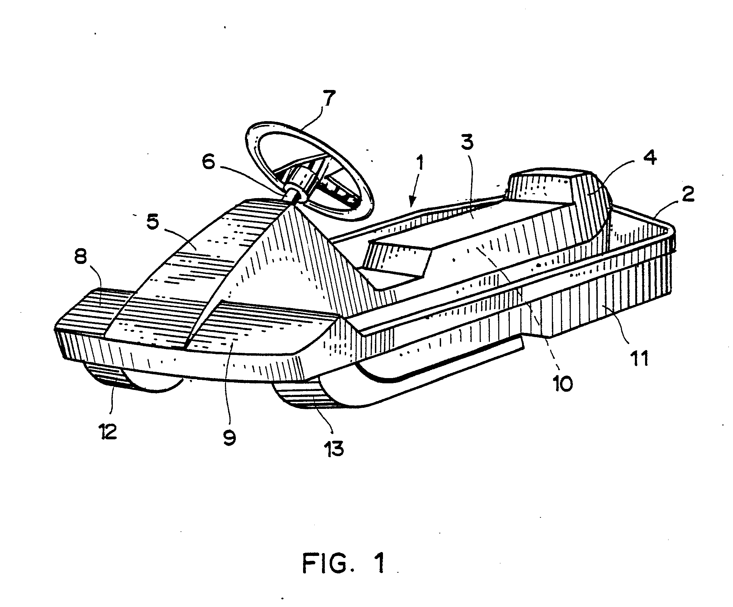

Der Schlitten 1 gemäss Fig. 1 umfasst einen Rahmen 2 mit einem darin angeordneten Sitz 3, welcher Sitz mit einer Rückenlehne 4 versehen ist. Der Rahmen weist einen Vorbau 5 auf, in welchem eine Steuersäule 6 mit einem an ihrem oberen Ende befestigten Steuerrad 7 gelagert ist. Seitlich des Vorbaues 5 sind zwei Fussstützen 8 und 9 angeordnet. Unterhalb des Rahmens 2 sind im hinteren Teil des Schlittens 1 zwei feste Kufen 10 und 11 und im vorderen Bereich zwei durch das Steuerrad 7 lenkbare, bewegliche Kufen 12 und 13 angeordnet. Der Rahmen, der Sitz, der Vorbau, die Fussstützen sowie die festen Kufen sind integriert miteinander ausgebildet.

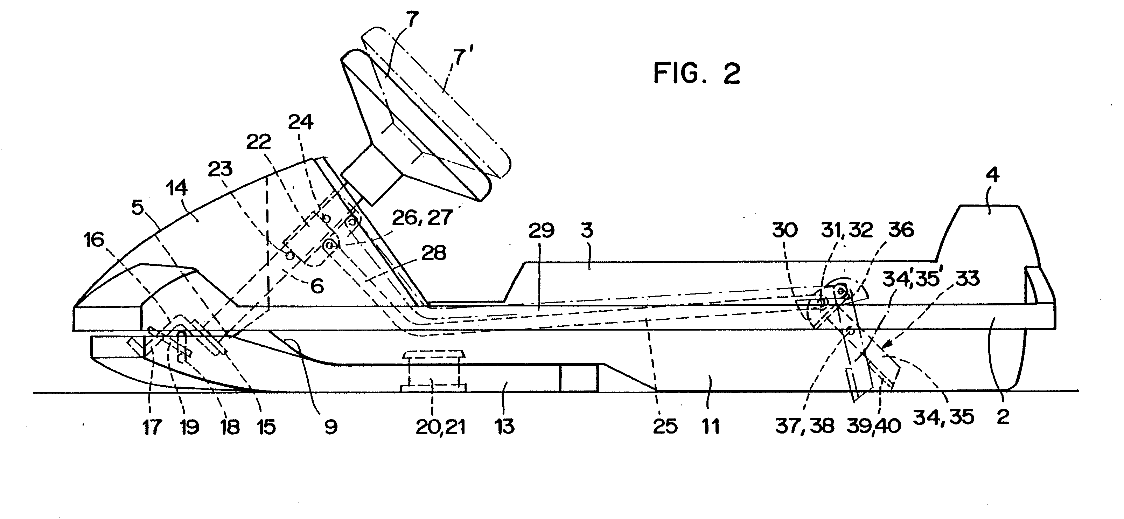

In Fig. 2 ist der Schlitten in Seitenansicht dargestellt. Auf der Unterseite des Vorbaues 5 ist ein Ansatz 14 vorgesehen, in welchem die Steuersäule 6 geführt ist. Das untere Ende der Steuersäule 6 ist mit einer Scheibe 15 versehen, so dass die Steuersäule nicht aus dem Ansatz 14 nach oben in Richtung des Steuerrades 7 herausrutschen kann. Mit der Scheibe 15 ist ein zweimal rechtwinklig abgebogener Hebel 16 verbunden. Der Hebel greift mit seinem abgewinkelten, von der Scheibe 15 abstehenden Teil 17 durch einen mittig mit einem Stab 18 verbundenen Bügel 19 hindurch. Der Stab 18 greift in die vorderen Enden der Steuerkufen 12 und 13 ein. Die Steuerkufen 12 und 13 sind je mit einem Zapfen 20 und 21 mit dem Rahmen 2 drehbar verbunden. Im oberen Bereich der Steuersäule 6 ist eine Bride 22 befestigt und mit zwei Schrauben 23 und 24 gegen ein Verrutschen entlang der Steuersäule 6 gesichert. Mit der Bride 22 ist ein Stab 25 mit einer Schraube und Mutter 26, 27 verbunden. Der Stab 25 weist einen etwa senkrecht zur Steuersäule 6 verlaufenden Teil 28 sowie einen etwa parallel zur Sitzfläche verlaufenden Teil 29 auf. An seinem von der Steuersäule 6 abgewandten Ende ist der Teil 29 des Stabes 25 mit einer weiteren Bride 30 mittels einer Schraube und Mutter 31, 32 gelenkig verbunden. Die Bride ist mit dem Bremsorgan 33 starr verbunden. Das Bremsorgan 33 ist gabelförmig ausgebildet, wobei die beiden parallelen Teile 34 und 35 des gabelförmigen Bremsorganes mit einem waagrecht verlaufenden Teil 36 verbunden sind. Die Bride 30 ist mit dem waagrechten Teil 36 starr verbunden. Die parallelen Teile 34 und 35 sind mittels Achsen 37 und 38 drehbar im Rahmen 2 gelagert. Die unteren Enden 39 und 40 der parallelen Tele 34 und 35 des Bremsorganes 33 sind verbreitert und verstärkt ausgebildet.

In der Position 7 des Steuerrades sind die gabelförmigen Teile 34 und 35 des Bremsorganes 33 nach oben geklappt und üben keine Bremswirkung aus. Zum Bremsen des Schlittens muss das Steuerrad 7 lediglich vom Schlittenfahrer in Richtung auf sich selbst in eine Position 7' gezogen werden, wobei dann die gabelförmigen Teile 34 und 35 in eine Bremslage 34' und 35' nach unten geklappt werden und die Bremswirkung ausüben.

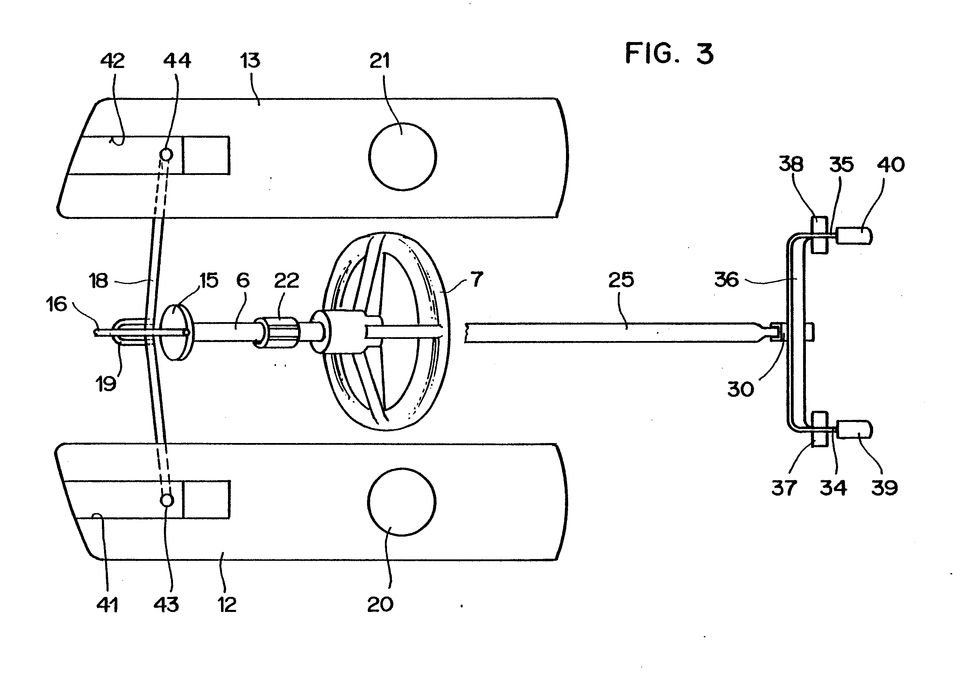

In Fig. 3 ist noch eine Ansicht der Bremsvorrichtung der lenkbaren Kufen sowie der Steuersäule mit Steuerrad von unten dargestellt. Der Stab 18 zur Betätigung der beweglichen Kufen 12 und 13 ist mit seinen äusseren Enden in Löchern 43 und 44 befestigt, die in Vertiefungen 41 und 42 an den vorderen Ende der beweglichen Kufen angeordnet sind.

Die Bremsvorrichtung könnte anstatt als Gabel beispielsweise auch als bewegliche Platte ausgebildet sein.

Der Schlitten ist als Bob ausgebildet und aus Kunststoff gefertigt.

Der Schlitten weist u.a. den Vorteil auf, dass beim Bremsvorgang die Lenkung des Schlittens optimal gewährleistet ist, da die Steuerung durch die beweglichen Kufen 12, 13 und der Bremsvorgang durch ein separates, im hinteren Teil des Schlittens angeordnetes Bremsorgan (33) erfolgt. Durch den einfachen und robusten Aufbau wird die Funktiontüchtigkeit der Lenkung und der Bremsung des Bobs gewährleistet.

## Ansprüche

1. Schlitten (1) mit einem auf einem Rahmen (2) angeordneten Sitz (3) und festen (10, 11) sowie mindestens einer beweglichen (12, 13), unterhalb des Rahmens (2) angeordneten Kufe, einer im Rahmen (2) gelagerten und um ihre Längsachse drehbaren, zur Steuerung der beweglichen Kufe (12, 13) bestimmten Steuersäule (6) und einer Bremsvorrichtung (33), dadurch gekennzeichnet, dass die Steuersäule (6) mit der Bremsvorrichtung (33) zusammenwirkt und zur Betätigung der Bremsvorrichtung (33) verschiebbar oder verkippbar gelagert ist.

2. Schlitten nach Patentanspruch 1, dadurch gekennzeichnet, dass an der Steuersäule (6) ein Hebel (25) befestigt ist, der mit der Bremsvorrichtung (33) verbunden ist.

3. Schlitten nach Patentanspruch 1 oder 2, dadurch gekennzechnet, dass im Bereich der festen Kufen (10, 11) im Rahmen (2) zwei Achsen zur drehbaren Lagerung der Bremsvorrichtung (33) vorgesehen sind.

4. Schlitten nach einem der vorangehenden Patentansprüche, dadurch gekennzeichnet, dass die Bremsvorrichtung (33) gabelförmig ausgebildet ist, wobei parallele Arme (34, 35) der Gabel an ihren Enden verbreitert ausgebildet sind.

5. Schlitten nach Patentanspruch 4, dadurch gekennzeichnet, dass ein die Arme verbindender Teil (36) mit dem Hebel verbunden ist.

6. Schlitten nach einem der vorangehenden Patentansprüche, dadurch gekennzeichnet, dass die Steuersäule (6) in ihrer Längsrichtung verschiebbar gelagert ist

7. Schlitten nach Patentanspruch 6, dadurch gekennzeichnet, dass die Steuersäule (6) derart mit der Bremsvorrichtung (33) verbunden ist, dass beim Verschieben der Steuersäule (6) in Richtung des Steuerrades (7) der Bremsvorgang ausgelöst wird.

8. Bremsvorrichtung für einen Schlitten, gekennzeichnet durch ein Verbindungselement (36), dessen eines Ende mit einem Befestigungsorgan (22, 23, 24, 26, 27) zur Befestigung an der Steuersäule (6) des Schlittens (1) versehen ist, und dessen anderes Ende mit einem verdrehbar bezüglich des Schlittens verbindbaren Bremsorgan (33) verbunden ist.

9. Bremsvorrichtung nach Patentanspruch 8, dadurch gekennzeichnet, dass sie gabelförmig ausgebildet ist, wobei parallele Arme (34, 35) der Gabel an ihren unteren Enden verbreitert ausgebildet sind.

10. Bremsvorrichtung nach Patentanspruch 8 oder 9, dadurch gekennzeichnet, dass das Verbindungselement (36) mit einem die Arme (34, 35) verbindenden Teil verbunden ist.

FIG. 1

FIG. 2

FIG. 3

42    44    13        21

38  35  40

18    15   6   22          7              25              36

16                                                 30

19

37  34  39

41   43   12        20

0 277 461

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 247 140 (O. GUT) * Seite 1, Zeile 36 - Seite 2, Zeile 14; Figuren 1,2 * --- | 1,2 | B 62 M 27/02 B 62 B 17/08 |
| X | DE-C- 327 273 (F. BELZ) * Seite 1, Zeile 59 - Seite 2, Zeile 50; Figuren 1-3 * --- | 1 | |
| A | DE-C- 353 841 (A. HEGER) * Figuren 1-4; Seite 2 * --- | 1 | |
| A | DE-B-1 252 076 (SKS METALLBAU) * Figuren 1-6; Spalte 3, Zeile 6 - Spalte 4, Zeile 16 * ----- | 1 | |

|  | RECHERCHIERTE SACHGEBIETE (Int. Cl.4) |
|---|---|
| | B 62 M B 62 B |

Der vorliegende Recherchenbericht wurde für alle Patentansprüche erstellt

| Recherchenort | Abschlußdatum der Recherche | Prüfer |
|---|---|---|
| DEN HAAG | 10-03-1988 | VANNESTE M.A.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument